# EUROPEAN PATENT APPLICATION

(11) **EP 4 737 837 A1**
(43) Date of publication of application: **06.05.2026**
(21) Application number: 24830198.8
(22) Date of filing: 13.05.2024
(51) Int. Cl.: F28C 1/14, F25B 25/00

(54) **COOLING TOWER SYSTEM**

(30) Priority: 28.06.2023 CN 202310782009
(71) Applicant: Shenzhen Envicool Technology Co., Ltd, Shenzhen, Guangdong 518000 (CN)
(72) Inventor: LIU, Xiang, Shenzhen, Guangdong 518000 (CN); SONG, Bin, Shenzhen, Guangdong 518000 (CN); CHEN, Yunwei, Shenzhen, Guangdong 518000 (CN); WU, Gang, Shenzhen, Guangdong 518000 (CN); WU, Ye, Shenzhen, Guangdong 518000 (CN)
(74) Representative: Potter Clarkson
(86) International application number: PCT/CN2024/092811
(87) International publication number: WO 2025/001550

(57) **Abstract**

A cooling tower system, comprising: a first cooling circulation system, the first cooling circulation system comprising a first heat dissipation part and a first heat absorption part communicated with each other; a second cooling circulation system, the second cooling circulation system comprising a second heat dissipation part and a second heat absorption part communicated with each other, and the first heat absorption part and the second heat absorption part being used for absorbing heat of the same object; and a cooling tower, the first heat dissipation part and the second heat dissipation part being both arranged on the cooling tower and sharing a cooling air duct, at least one first heat dissipation part being a wet-cooling heat dissipation part, and at least one second heat dissipation part being a dry-cooling heat dissipation part. Sharing the air duct facilitates a compact structure, and enables a single device to obtain a larger air volume, so as to avoid heat concentration, accordingly separately achieving better heat dissipation effects. Even if the two are used at the same time, because the mutual interference influence of dry cooling and wet cooling is very small, sharing the air duct can better ensure the air volume on the contrary. Therefore, the plurality of cooling circulation systems in the cooling tower system can better coordinate to work.

## Description

The present application claims the priority to Chinese Patent Application No. 202310782009.1, titled "COOLING TOWER SYSTEM", filed with the China National Intellectual Property Administration on June 28 2023, the entire disclosure of which is incorporated herein by reference.

### FIELD

The present application relates to the technical field of cooling, and in particular to a cooling tower system.

### BACKGROUND

Generally, in an existing cooling tower system, one single medium is applied in the cooling structure having an independent volumetric space. In case of a system having both a water circulation loop and a refrigerant circulation loop or in case of multiple systems that cooperate with each other, spaces occupied by the individual loops or systems are independent and separate, which has the advantages of simple arrangement and easy operation and installation. However, with the increasing requirements in terms of space utilization, performance and cost, there is currently no better solution to achieve a high heat exchanging efficiency while ensuring a high performance in a small space.

Therefore, it is desired for those skilled in the art to effectively improve the cooperative operation performance of multiple systems of the cooling tower system.

### SUMMARY

In view of above, an object of the present application is to provide a cooling tower system, which can effectively improve cooperative operation performance of multiple systems of the cooling tower system.

In order to achieve the object, there are provided in the present application the following technical solutions.

A cooling tower system includes a first cooling circulation system, a second cooling circulation system, and a cooling tower. The first cooling circulation system includes at least one first heat dissipation section and a first heat absorption section, which are in communication. The second cooling circulation system includes at least one second heat dissipation section and a second heat absorption section, which are in communication. The first heat absorption section and the second heat absorption section are configured to absorb heat from a same object. The at least one first heat dissipation section and the at least one second heat dissipation section are located in the cooling tower and share a cooling air duct. The at least one first heat dissipation section is configured as a wet-cool heat dissipation section, and the at least one second heat dissipation section is configured as a dry-cool heat dissipation section.

In the above cooling tower system, multiple cooling circulation systems are provided, and the cooling tower is provided with a dry zone where dry cooling is performed in one cooling circulation system and a wet zone where wet cooling is performed in another cooling circulation system. The dry cooling and the wet cooling may be used in different environmental conditions, respectively. The dry cooling has a better cooling effect when the ambient temperature is relatively low and the wet cooling has a better cooling effect when the ambient temperature is relatively high. Further, the dry-cool circulation system and the wet-cool circulation system may be used in different ways depending on different conditions. Therefore, when sharing the air duct, the dry-cool circulation system and the wet-cool circulation system are used at different times in some situations. Especially in some environments, the dry-cool circulation system and the wet-cool circulation system are used at different times in most cases, so that the dry-cool circulation system and the wet-cool circulation system cannot interfere with each other. Meanwhile, the air duct is shared, which is beneficial for a compact structure, and a large air rate is available for one of the systems so as to avoid heat concentration, thereby achieving a better heat dissipation effect. Even if the dry-cool circulation system and the wet-cool circulation system are used simultaneously, since the mutual interference between the dry cooling and the wet cooling is very small, it can further ensure an air rate especially when the air duct is shared. As such, multiple cooling circulation systems in the cooling tower system can cooperate well. Therefore, the cooling tower system can effectively address the issue of poor cooperative operation performance of multiple systems of the conventional cooling tower system.

In some solutions, a heat exchange efficiency of a refrigerant in the first cooling circulation system is set lower than a heat exchange efficiency of a refrigerant in the second cooling circulation system.

In some solutions, the first cooling circulation system is configured as a water cooling circulation system and the second cooling circulation system is configured as a mechanical refrigeration system.

In some solutions, a density of a heat exchange structure of the at least one first heat dissipation section is lower than a density of a heat exchange structure of the at least one second heat dissipation section.

In some solutions, the first heat absorption section and the second heat absorption section are configured to share an air duct.

In some solutions, the first heat absorption section is located upstream of the second heat absorption section in the air duct.

In some solutions, the cooling tower system further includes a heat exchange system. A heat dissipation section of the heat exchange system is in thermal contact with both the first heat absorption section and the second heat absorption section, and a heat absorption section of the heat exchange system is configured to be in contact with a heat source.

In some solutions, the heat exchange system is configured as a water cooling system.

In some solutions, a fan is provided for each of the first heat absorption section and the second heat absorption section to accelerate flow of air.

In some solutions, the cooling tower includes two cooling air ducts, which are arranged in parallel and have two air inlets arranged opposite to each other. The first cooling circulation system has two first heat dissipation sections respectively arranged at the air inlets of the two cooling air ducts, and the second cooling circulation system has two second heat dissipation sections respectively arranged in the two cooling air ducts.

### BRIEF DESCRIPTION OF THE DRAWINGS

In order to clearly illustrate the embodiments of the present application or the technical solutions in the prior art, a brief introduction will be given to the accompanying drawings required for the description of the embodiments or the prior art. It is obvious that the accompanying drawings described below are only some embodiments of the present application. For those skilled in the art, other drawings can be obtained based on these drawings without paying creative work.
FIG. 1 is a schematic structural view of a cooling tower system according to an embodiment of the present application;
FIG. 2 is a schematic structural view of a cooling tower system according to another embodiment of the present application; and
FIG. 3 is a schematic structural view of a cooling tower system according to yet another embodiment of the present application.

Numeral references in the accompany drawings are listed below:

| | | | |
|---|---|---|---|
| 1 | first cooling circulation system, | 2 | second cooling circulation system, |
| 3 | cooling tower, | 4 | external fan, |
| 5 | internal fan, | 6 | heat exchange system; |
| 11 | first heat dissipation section, | 12 | first heat absorption section, |
| 13 | circulating pump; | 21 | second heat dissipation section, |
| 22 | second heat absorption section, | 23 | compressor, |
| 24 | throttling element; | 31 | cooling air duct. |

### DETAILED DESCRIPTION OF THE EMBODIMENTS

A cooling tower system is provided according to embodiments of the present application, which effectively addresses the issue of poor cooperative operation effort of multiple systems of the cooling tower system.

The technical solutions in the embodiments of the present application will be clearly and completely described in conjunction with the accompanying drawings below. Obviously, the described embodiments are only a part of the embodiments of the present application, not all of them. Based on the embodiments of the present application, all other embodiments obtained by those skilled in the art without creative labor are within the protection scope of the present application.

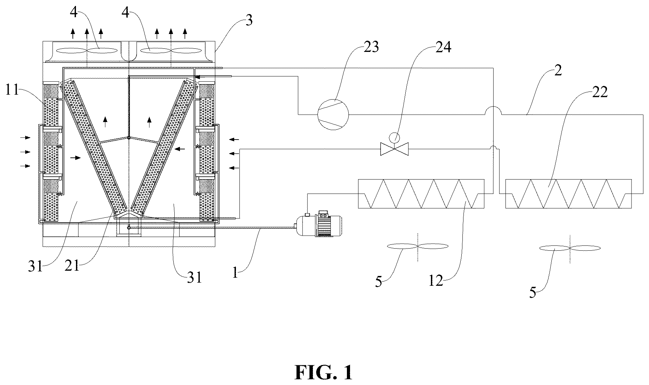

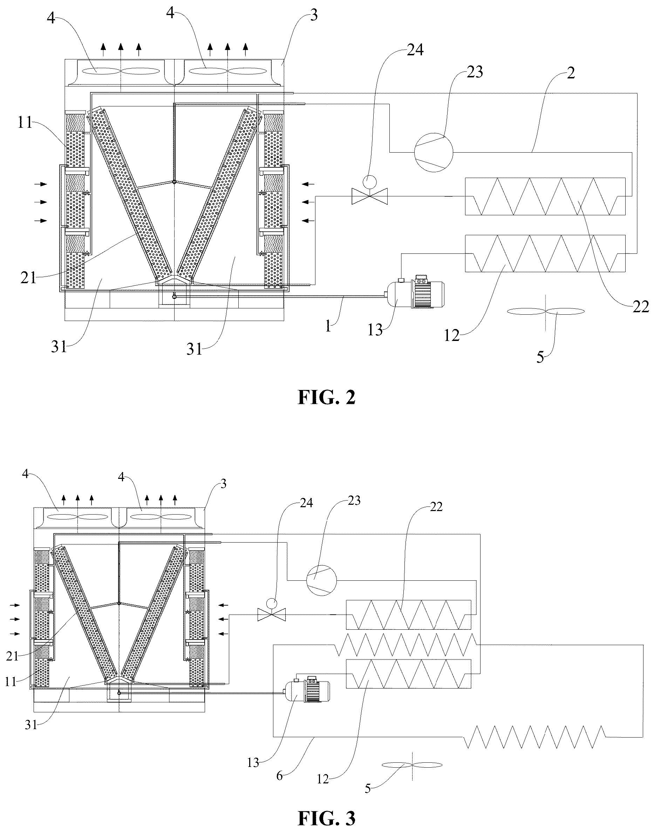

Refer to FIGS. 1 to 3. FIG. 1 is a schematic structural view of a cooling tower system according to an embodiment of the present application; FIG. 2 is a schematic structural view of a cooling tower system according to another embodiment of the present application; and FIG. 3 is a schematic structural view of a cooling tower system according to yet another embodiment of the present application.

In some embodiments, a cooling tower system is provided. The cooling tower system includes a first cooling circulation system 1, a second cooling circulation system 2, and a cooling tower 3.

Either the first cooling circulation system 1 or the second cooling circulation system 2 may be configured as a water cooling system or a mechanical refrigeration system. Each of the first cooling circulation system 1 and the second cooling circulation system 2 mainly includes a heat dissipation section and a heat absorption section. The heat absorption section is used to absorb heat, and the heat dissipation section is used to dissipate heat. In the mechanical refrigeration system, the heat absorption section is typically configured as an evaporator, and the heat dissipation section is typically configured as a condenser. It should be noted that one or more first cooling circulation systems 1 may be provided, and one or more second cooling circulation systems 2 may be provided. Optionally, another cooling circulation system may be further provided.

For convenience of explanation, the first cooling circulation system 1 includes a first heat dissipation section 11 and a first heat absorption section 12, which are in communication with each other. The second cooling circulation system 2 includes a second heat dissipation section 21 and a second heat absorption section 22, which are in communication with each other. The first heat absorption section 12 and the second heat absorption section 22 are used to absorb heat from a same object. The first heat absorption section 12 and the second heat absorption section 22 may be located at the same position or different positions while absorbing heat from the same object. That is, the heat dissipation object for the first heat absorption section 12 is at least the same as that for the second heat absorption section 22, so that the first heat absorption section 12 and the second heat absorption section 22 can perform the same function on the heat dissipation object.

The first heat dissipation section 11 and the second heat dissipation section 21 are both located in the cooling tower 3 to share an air duct 31 and thus an external fan 4. An air duct for the first heat dissipation section 11 and an air duct for the second heat dissipation section 21 may be arranged in parallel. Alternatively, the air duct for the first heat dissipation section 11 and the air duct for the second heat dissipation section 21 may be arranged in series so as to be combined together to form the air duct 31. In case of connection in series, one of the first heat dissipation section 11 and the second heat dissipation section 21 is located upstream of the air duct 31, and the other is located downstream of the air duct 31. In case that multiple first heat dissipation sections 11 and/or multiple second heat dissipation sections 21 are provided, the first heat dissipation sections 11 and the second heat dissipation sections 21 may be arranged in an alternate manner in an extending direction of the air duct 31.

At least one first heat dissipation section 11 is configured as a wet-cool heat dissipation section, and at least one second heat dissipation section 21 is configured as a dry-cool heat dissipation section, so that the air in the cooling tower 3 may flow through the wet-cool heat dissipation section and then flow through the dry-cool heat dissipation section, or flows through the dry-cool heat dissipation section and then flow through the wet-cool heat dissipation section. In the dry-cool heat dissipation section, heat is mainly absorbed by the low-temperature air, which then is discharged, so as to achieve cooling. In the wet-cool heat dissipation section, heat is mainly absorbed by the sprayed water, which is then evaporated and taken away by the air. Therefore, no matter the air passes through the wet-cool heat dissipation section and then through the dry-cool heat dissipation section or passes through the dry-cool heat dissipation section and then through the wet-cool heat dissipation section, there is no significant interference between the wet-cool heat dissipation section and the dry-cool heat dissipation section. Especially, it is preferred to enable the air to pass through the wet-cool heat dissipation section and then through the dry-cool heat dissipation section.

In the above cooling tower system, multiple cooling circulation systems are provided, and the cooling tower 3 is provided with a dry zone where dry cooling is performed in one cooling circulation system and a wet zone where wet cooling is performed in another cooling circulation system. The dry cooling and the wet cooling may be used in different environmental conditions, respectively. The dry cooling has a better cooling effect when the ambient temperature is relatively low and the wet cooling has a better cooling effect when the ambient temperature is relatively high. Further, the dry-cool circulation system and the wet-cool circulation system may be used in different ways depending on different conditions. Therefore, when sharing the air duct, the dry-cool circulation system and the wet-cool circulation system are used at different times in some situations. Especially in some environments, the dry-cool circulation system and the wet-cool circulation system are used at different times in most cases, so that the dry-cool circulation system and the wet-cool circulation system cannot interfere with each other. Meanwhile, the air duct is shared, which is beneficial for a compact structure, and a large air rate is available for one of the systems so as to avoid heat concentration, thereby achieving a better heat dissipation effect. Even if the dry-cool circulation system and the wet-cool circulation system are used simultaneously, since the mutual interference between the dry cooling and the wet cooling is very small, it can further ensure an air rate especially when the air duct is shared. As such, multiple cooling circulation systems in the cooling tower system can cooperate well. Therefore, the cooling tower system can effectively address the issue of poor cooperative operation performance of multiple systems of the conventional cooling tower system.

In some embodiments, the heat exchange efficiency of the refrigerant in the first cooling circulation system 1 may be set lower than that in the second cooling circulation system 2. In case of requirement for a low cooling capacity, the first cooling circulation system 1 may be in operation for wet cooling, and the second cooling circulation system 2 is switched off. In case of requirement for a high cooling capacity, the second cooling circulation system 2 may be in operation, and the first cooling circulation system 1 is switched off, so that the dry cooling is performed when the heat exchange requirement is high, which can effectively reduce the evaporation caused by wet cooling, thereby effectively reducing scaling and improving the service life. Alternatively, in case of requirement for a lower cooling capacity, the first cooling circulation system 1 may be switched off and the second cooling circulation system 2 is in operation in a low-power mode. In the first cooling circulation system 1 that works with wet cooling, in case of requirement for a low cooling capacity, the first heat dissipation section 11 may also dissipate heat through water cooling rather than evaporation.

In some embodiments, the first cooling circulation system 1 may be configured as a water cooling circulation system and the second cooling circulation system 2 may be configured as a mechanical refrigeration system, which can better reduce the scaling amount at the first heat dissipation section 11.

In some embodiments, the first cooling circulation system 1 and the second cooling circulation system 2 may be both configured as mechanical refrigeration systems, which may have the same or different heat exchange capabilities. In use, In case of requirement for a low cooling capacity, the first cooling circulation system 1 may be in operation, and the second cooling circulation system 2 may be switched off. In case of requirement for a high cooling capacity, the second cooling circulation system 2 may be in operation and the first cooling circulation system 1 may be switched off. Therefore, the scaling amount can be also reduced.

In some embodiments, the first cooling circulation system 1 may be configured as water cooling circulation system, which specifically includes a circulating pump 13, a first heat dissipation section 11, and a first heat absorption part 12, which are in communication in sequence. The circulating pump 13 is used to increase the flow rate of the fluid in the first cooling circulation system.

In some embodiments, the second cooling circulation system 2 may include a compressor 23, a second heat dissipation section 21, a throttling element 24, and a second heat absorption part 22, which are in communication in sequence.

In some embodiments, the density of a heat exchange structure of the first heat dissipation section 11 is lower than that of the second heat dissipation section 21. In the wet zone, the water needs to flow between pipelines, and thus a blockage may occur if a gap between pipelines is small, which does not exist in the dry zone. Therefore, the density of the heat exchange structure in the dry zone may be set higher.

In some embodiments, the first heat absorption section 12 and the second heat absorption section 22 may be configured to share an air duct and thus share the internal fan 5, and thus the overall structure is compact and the manufacturing cost is low. In case of that the internal fan 5 is shared, the air duct of the first heat absorption section 12 and the air duct of the second heat absorption section 22 can be arranged in parallel or in series. In some situations, the first cooling circulation system 1 and the second cooling circulation system 2 are operated at different times, which has less mutual interference between the first heat absorption section 12 and the second heat absorption section 22 and is beneficial for obtaining a greater air rate and improving heat absorption efficiency.

In some embodiments, the first heat absorption section 12 may be located upstream of the second heat absorption section 22 in the air duct. In this way, the air passes through the first heat absorption section 12 firstly and thus absorbs heat from the first heat absorption section 12 so as to cool the first heat absorption section 12, and then passes through the second heat absorption section 22 and thus absorbs heat from the second heat absorption section 22 so as to further cool the second heat absorption section 22. This is beneficial to lower the temperature of the heat absorption section quickly and effectively reduce the working pressure of the second refrigerant circulation system.

In some embodiments, separate air ducts may be provided for the first heat absorption section 12 and the second heat absorption section 22, which has less mutual interference between the first heat absorption section 12 and the second heat absorption section 22 and thus achieves a better effect when being used simultaneously.

In some embodiments, the first heat absorption section 12 and the second heat absorption section 22 are both provided to dissipate heat from the heat source. In some situations, there is a limited space at the heat source where cannot accommodate multiple heat absorption sections. In that case, it is preferred that a heat exchange system 6 is further provided, with a heat dissipation section of the heat exchange system 6 being in thermal contact with both the first heat absorption section 12 and the second heat absorption section 22, and a heat absorption section of the heat exchange system 6 being in contact with the heat source, so that the heat exchange system 6 functions as an intermediate system, which absorbs heat from the first heat absorption section 12 and the second heat absorption section 22 and then transfers the heat to the heat source. Therefore, it is applied to the case of limited space at the heat source and beneficial to uniformly transfer heat.

In some embodiments, the heat exchange system 6 may be configured as a water cooling system, which facilitates transferring heat. Alternatively, the heat exchange system 6 may be a thermal conductor.

In some embodiments, the cooling tower 3 includes two cooling air ducts 31, which are arranged in parallel, and two air inlets of the two cooling air ducts are arranged opposite to each other so as to provide a greater air intake range. Specifically, the two first heat dissipation sections 11 of the first cooling circulation system 1 may be respectively arranged at the inlets of the two cooling air ducts 31, and the two second heat dissipation sections 21 of the second cooling circulation system 2 may be respectively arranged in the two cooling air ducts 31. The first cooling circulation system 1 may be provided with two first heat dissipation sections 11, and two first heat dissipation sections 11 may be connected in series or in parallel and then be communicated with the first heat absorption part 12. It is preferred that two first heat dissipation sections 11 are arranged in parallel so that the two parallel first heat dissipation sections 11 can simultaneously dissipate heat from different parts of the heat dissipation object, which has a good heat dissipation uniformity. Similarly, the second cooling circulation system 2 may be provided with two second heat dissipation sections 21, and two second heat dissipation sections 21 may be connected in series or in parallel and then be communicated with the second heat absorption part 22. It is preferred that two second heat dissipation sections 21 are arranged in parallel so that the two parallel second heat dissipation sections 21 can simultaneously dissipate heat from different parts of the heat dissipation object, which has a good heat dissipation uniformity.

The various embodiments in the specification are described in progressive manner, and each embodiment emphasizes its differences from other embodiments. The same and similar parts between the various embodiments can be referred to each other.

The above description of the disclosed embodiments enables those skilled in the art to implement or use the present application. Various modifications to these embodiments will be apparent to those skilled in the art, and the general principles defined herein can be implemented in other embodiments without departing from the spirit or scope of the present application. Therefore, the present application will not be limited to the embodiments shown herein, but will be within the widest scope consistent with the principles and features disclosed herein.

## Claims

1. A cooling tower system, comprising:
a first cooling circulation system;
a second cooling circulation system; and
a cooling tower, wherein
the first cooling circulation system comprises at least one first heat dissipation absorption section and a first heat absorption section, which are in communication;
the second cooling circulation system comprises at least one second heat dissipation section and a second heat absorption section, which are in communication, wherein the first heat absorption section and the second heat absorption section are configured to absorb heat from a same object; and
the at least one first heat dissipation section and the at least one second heat dissipation section are located in the cooling tower and share a cooling air duct, the at least one first heat dissipation section is configured as a wet-cool heat dissipation section, and the at least one second heat dissipation section is configured as a dry-cool heat dissipation section.

2. The cooling tower system according to claim 1, wherein
a heat exchange efficiency of a refrigerant in the first cooling circulation system is set lower than a heat exchange efficiency of a refrigerant in the second cooling circulation system.

3. The cooling tower system according to claim **1,** wherein
the first cooling circulation system is configured as a water cooling circulation system and the second cooling circulation system is configured as a mechanical refrigeration system.

4. The cooling tower system according to claim 3, wherein
a density of a heat exchange structure of the at least one first heat dissipation section is lower than a density of a heat exchange structure of the at least one second heat dissipation section.

5. The cooling tower system according to claim 3 or 4, wherein
the first heat absorption section and the second heat absorption section are configured to share an air duct.

6. The cooling tower system according to claim 5, wherein
the first heat absorption section is located upstream of the second heat absorption section in the air duct.

7. The cooling tower system according to any one of claims 1 to 4, further comprising a heat exchange system, wherein
a heat dissipation section of the heat exchange system is in thermal contact with both the first heat absorption section and the second heat absorption section, and a heat absorption section of the heat exchange system is configured to be in contact with a heat source.

8. The cooling tower system according to claim 7, wherein
the heat exchange system is configured as a water cooling system.

9. The cooling tower system according to any one of claims 1 to 4, wherein
a fan is provided for each of the first heat absorption section and the second heat absorption section to accelerate flow of air.

10. The cooling tower system according to any one of claims 1 to 4, wherein
the cooling tower comprises two cooling air ducts, which are arranged in parallel and have two air inlets arranged opposite to each other; and
the first cooling circulation system has two first heat dissipation sections respectively arranged at the air inlets of the two cooling air ducts, and the second cooling circulation system has two second heat dissipation sections respectively arranged in the two cooling air ducts.
